# EUROPÄISCHE PATENTANMELDUNG

(11) **EP 3 231 972 A1**
(43) Veröffentlichungstag der Anmeldung: **18.10.2017**
(21) Anmeldenummer: 17020057.0
(22) Anmeldetag: 14.02.2017
(51) Int. Cl.: E05C 19/02, B60K 15/05

(54) **MECHANISMUS UND VERFAHREN ZUM BETÄTIGEN EINER LADEKLAPPE**

(30) Priorität: 12.04.2016 DE 102016106651
(71) Anmelder: Dr. Ing. h.c. F. Porsche AG, 70435 Stuttgart (DE)
(72) Erfinder: Geißenhöner, Kai, 98529 Suhl (DE); Ranft, Detlev, 76275 Ettlingen (DE)

(57) **Zusammenfassung**

Die Erfindung betrifft einen Mechanismus zum Betätigen einer Ladeklappe (10), insbesondere eines Elektrofahrzeugs (1), die durch eine Viergelenkanordnung (14) so an eine Tragstruktur angelenkt ist, dass die Ladeklappe (10) zwischen einer Schließstellung (Fig.3A) und einer Offenstellung (Fig.3F) bewegbar ist.

Um das Betätigen der Ladeklappe zu vereinfachen, umfasst der Mechanismus zum Betätigen der Ladeklappe (10) ein Push-Push-Element, das mit einer Federeinrichtung kombiniert ist, die der Viergelenkanordnung (14) zugeordnet ist.

## Beschreibung

Die Erfindung betrifft einen Mechanismus und ein Verfahren zum Betätigen einer Ladeklappe, insbesondere eines Elektrofahrzeugs, die durch eine Viergelenkanordnung so an eine Tragstruktur angelenkt ist, dass die Ladeklappe zwischen einer Schließstellung und einer Offenstellung bewegbar ist. Die Erfindung betrifft des Weiteren ein Elektrofahrzeug mit einer Ladeklappe, die mit einem derartigen Mechanismus betätigbar ist.

Aus der amerikanischen Offenlegungsschrift US 2015/0375630 A1 ist eine Viergelenkstruktur zum Öffnen einer Ladeklappe bei Elektrofahrzeugen bekannt. Aus der deutschen Offenlegungsschrift DE 44 38 610 A1 ist eine verstellbare Klappe, insbesondere Tankklappe eines Kraftfahrzeugs, bekannt, die über ein Stellorgan und einen Schwenkhebel, der einerseits um eine ortsfeste Schwenkachse und andererseits um eine zur Schwenkachse etwa parallele Achse an der Klappe schwenkbar befestigt ist, von einer eine Wandöffnung verschließenden Schließstellung in eine die Wandöffnung zumindest teilweise freigebende Offenstellung über einen Randbereich der Wandöffnung verstellbar ist, wobei das Stellorgan ein zweiter, einerseits um eine ortsfeste Schwenkachse und andererseits um eine Achse an der Klappe schwenkbarer Schwenkhebel ist, der mit dem anderen Schwenkhebel und der Klappe ein Viergelenk bildet.

Aufgabe der Erfindung ist es, das Betätigen einer Ladeklappe, insbesondere eines Elektrofahrzeugs, die durch eine Viergelenkanordnung so an eine Tragstruktur angelenkt ist, dass die Ladeklappe zwischen einer Schließstellung und einer Offenstellung bewegbar ist, zu vereinfachen.

Die Aufgabe ist bei einem Mechanismus zum Betätigen einer Ladeklappe, insbesondere eines Elektrofahrzeugs, die durch eine Viergelenkanordnung so an eine Tragstruktur angelenkt ist, dass die Ladeklappe zwischen einer Schließstellung und einer Offenstellung bewegbar ist, dadurch gelöst, dass der Mechanismus zum Betätigen der Ladeklappe ein Push-Push-Element umfasst, das mit einer Federeinrichtung kombiniert ist, die der Viergelenkanordnung zugeordnet ist. In der Schließstellung ist eine Ladeöffnung des Elektrofahrzeugs durch die Ladeklappe verschlossen. In der Offenstellung wird die Ladeöffnung des Elektrofahrzeugs von der Ladeklappe freigegeben, so dass ein Ladestecker in die Ladeöffnung eingesteckt werden kann, um das Elektrofahrzeug, insbesondere eine elektrische Energiespeichereinrichtung in dem Elektrofahrzeug, elektrisch aufzuladen. Durch die Kombination der Federeinrichtung mit dem Push-Push-Element wird auf einfache Art und Weise ein besonders komfortabler Mechanismus zum Betätigen der Ladeklappe geschaffen. Das Push-Push-Element ist vorteilhaft mit einer Verriegelungseinrichtung kombiniert. Mit Hilfe der Verriegelungseinrichtung kann das Push-Push-Element blockiert werden, so dass die Ladeklappe, zum Beispiel in einem Parkbetrieb oder in einem Fahrbetrieb des Elektrofahrzeugs, geschlossen gehalten wird. Dadurch wird ein unerwünschtes Betätigen, insbesondere Öffnen, der Ladeklappe in bestimmten Betriebszuständen, zum Beispiel beim Parken, sicher verhindert. Eine Verriegelungseinrichtung mit einer Push-Push-Mechanik für andere Anwendungen, wie zum Geschlossenhalten von Behältnissen, wie Aschern, Schubladen, verschließbaren Ablagen auf einer Mittelkonsole oder Handschuhfachdeckeln, ist an sich bekannt, zum Beispiel aus der deutschen Offenlegungsschrift DE 10 2010 050 800 A1.

Ein bevorzugtes Ausführungsbeispiel des Mechanismus ist dadurch gekennzeichnet, dass die Ladeklappe durch die Federeinrichtung in ihre Schließstellung und in ihre Offenstellung vorgespannt ist. Dadurch wird ein manuelles Öffnen und Schließen der Ladeklappe erheblich vereinfacht. Durch das Vorspannen der Ladeklappe in ihre Schließstellung wird vorteilhaft sicher verhindert, dass die Ladeklappe nach einem Ladevorgang ungewollt offenbleibt. Das Vorspannen der Ladeklappe sowohl in ihre Schließstellung als auch in ihre Offenstellung wird durch eine Wirkungsumkehr von Hebelarmen der Viergelenkanordnung mit Hilfe der Federeinrichtung realisiert. Ein Öffnen der Ladeklappe wird zunächst durch das Push-Push-Element initiiert. Daraufhin wird die Ladeklappe zunächst manuell, das heißt von Hand, weiter geöffnet, bis die Ladeklappe schließlich durch die Federeinrichtung in ihre Offenstellung bewegt wird.

Ein weiteres bevorzugtes Ausführungsbeispiel des Mechanismus ist dadurch gekennzeichnet, dass die Federeinrichtung einen Federtotpunkt aufweist, dem eine Totpunktstellung der Ladeklappe zugeordnet ist, in welcher die Ladeklappe zwischen ihrer Schließstellung und ihrer Offenstellung angeordnet ist. Durch diesen Federtotpunkt wird die Wirkungsumkehr der Hebelarme der Viergelenkanordnung realisiert. In der Totpunktstellung ist die Ladeklappe vorteilhaft viel näher zu ihrer Schließstellung als zu ihrer Offenstellung angeordnet. Durch das Push-Push-Element wird die Ladeklappe vorzugsweise geringfügig, zum Beispiel etwa fingerbreit, geöffnet.

Ein weiteres bevorzugtes Ausführungsbeispiel des Mechanismus ist dadurch gekennzeichnet, dass die Ladeklappe aus ihrer Schließstellung nach oben in ihre Offenstellung verschwenkbar ist. Der Begriff nach oben bezieht sich auf eine Fahrzeug-z-Richtung. Eine Längsrichtung oder Längsachse des Elektrofahrzeugs wird auch als x-Richtung bezeichnet. Eine Querrichtung des Elektrofahrzeugs wird auch als Fahrzeug-y-Richtung oder y-Achse bezeichnet. Die Fahrzeug-z-Richtung oder z-Achse steht senkrecht auf einer Ebene, die von der x-Achse und der y-Achse aufgespannt wird. In ihrer Offenstellung ist die Ladeklappe vorzugsweise so weit oberhalb der Ladeöffnung angeordnet, dass auf einfache Art und Weise ein passender Ladestecker in die Ladeöffnung eingesteckt werden kann, um das Elektrofahrzeug beziehungsweise die in dem Elektrofahrzeug angeordnete elektrische Energiespeichereinrichtung mit elektrischer Energie aufzuladen.

Ein weiteres bevorzugtes Ausführungsbeispiel des Mechanismus ist dadurch gekennzeichnet, dass die Ladeklappe in ihrer Offenstellung oberhalb einer Ladeöffnung angeordnet ist. Dadurch wird das Aufladen des Elektrofahrzeugs vereinfacht. In der Offenstellung ist die Ladeklappe vorteilhaft an einem Karosseriebereich, insbesondere einem Kotflügelbereich, des Elektrofahrzeugs angeordnet. Die Ladeöffnung mit der Ladeklappe ist besonders bevorzugt an einem vorderen Kotflügel des Elektrofahrzeugs angeordnet.

Ein weiteres bevorzugtes Ausführungsbeispiel des Mechanismus ist dadurch gekennzeichnet, dass die Viergelenkanordnung zwei Lenkerpaare umfasst, die an zwei Seiten der Ladeklappe angelenkt sind. Die Lenkerpaare der Viergelenkanordnung umfassen vorteilhaft jeweils zwei Lenker, die vorzugsweise gleich ausgeführt sind. Dadurch werden die Konstruktion und die Herstellung der Viergelenkanordnung vereinfacht. Mit den beiden Lenkerpaaren der Viergelenkanordnung kann die Ladeklappe besonders stabil in ihrer Offenstellung gehalten werden. Dadurch werden unerwünschte Beschädigungen der Ladeklappe beziehungsweise der Viergelenkanordnung bei geöffneter Ladeklappe, insbesondere beim Laden, verhindert. Die Ladeöffnung ist besonders vorteilhaft zwischen den beiden Lenkerpaaren der Viergelenkanordnung angeordnet.

Bei einem Verfahren zum Betätigen einer Ladeklappe, insbesondere eines Elektrofahrzeugs, mit einem vorab beschriebenen Mechanismus, ist die oben angegebene Aufgabe alternativ oder zusätzlich dadurch gelöst, dass die Ladeklappe nach Druckausübung auf das Push-Push-Element beim Öffnen durch das Push-Push-Element zunächst nur geringfügig, insbesondere etwa fingerbreit, geöffnet wird, bevor die Ladeklappe dann manuell weiter geöffnet wird. Das Push-Push-Element ist vorteilhaft hinter der Ladeklappe angeordnet. Eine Position des Push-Push-Elements hinter der Ladeklappe kann auf der Ladeklappe entsprechend markiert sein. Das Push-Push-Element ist besonders vorteilhaft in einem Eckbereich und/oder in einem Randbereich der Ladeklappe angeordnet. Die geringfügige Öffnung der Ladeklappe durch das Push-Push-Element ermöglicht vorteilhaft ein manuelles Weiteröffnen der Ladeklappe. Das manuelle Weiteröffnen der Ladeklappe wird vorteilhaft durch die Federeinrichtung unterstützt.

Ein bevorzugtes Ausführungsbeispiel des Verfahrens ist dadurch gekennzeichnet, dass die Ladeklappe beim weiteren Öffnen nach Überwinden eines beziehungsweise des Federtotpunkts durch die Federeinrichtung in ihre Offenstellung bewegt wird. Das vollständige Öffnen der Ladeklappe erfolgt durch die Kombination der Federeinrichtung mit dem Viergelenk dann sozusagen automatisch.

Ein weiteres bevorzugtes Ausführungsbeispiel des Verfahrens ist dadurch gekennzeichnet, dass die Ladeklappe beim Schließen zunächst manuell so weit geschlossen wird, bis die Ladeklappe nach Überwinden des Federtotpunkts durch die Federeinrichtung geschlossen wird. Dadurch wird auf einfache Art und Weise erreicht, dass die Ladeklappe automatisch vorzugsweise vollständig geschlossen wird.

Die Erfindung betrifft des Weiteren ein Elektrofahrzeug mit einer Ladeklappe, die mit einem vorab beschriebenen Mechanismus, insbesondere gemäß einem vorab beschriebenen Verfahren, betätigbar ist. Durch die Kombination des Push-Push-Elements mit der Federeinrichtung und der Viergelenkanordnung kann auf einfache Art und Weise eine besonders komfortable Betätigung der Ladeklappe erreicht werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 eine perspektivische Darstellung eines vorderen Kotflügels eines Elektrofahrzeugs mit einer Ladeöffnung, die durch eine Ladeklappe verschließbar ist;
Figur 2 die Ladeöffnung mit der Ladeklappe aus Figur 1 in einer Schnittdarstellung;
Figur 3 eine Folge von insgesamt sechs Figuren 3A bis 3F, die eine Bewegung der Ladeklappe zwischen einer Offenstellung und einer Schließstellung veranschaulichen;
Figur 4 eine Folge von insgesamt fünf Figuren 4A bis 4E, die das Öffnen der Ladeklappe veranschaulichen, und
Figur 5 eine Folge von ebenfalls insgesamt fünf Figuren 5A bis 5E, die das Schließen der Ladeklappe veranschaulichen.

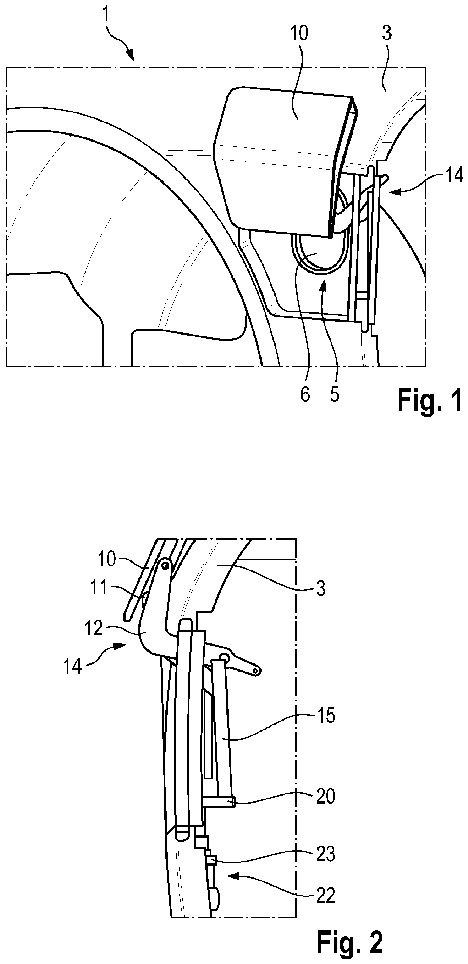

In Figur 1 ist ein vorderer Kotflügel 3 eines Elektrofahrzeugs 1 vereinfacht perspektivisch dargestellt. Das Elektrofahrzeug 1 umfasst eine Ladeeinheit 5 mit einer Ladeöffnung 6.

Die Ladeeinheit 5 des Elektrofahrzeugs 1 ist einer elektrischen Energiespeichereinrichtung des Elektrofahrzeugs 1 zugeordnet. In die Ladeöffnung 6 kann ein (nicht dargestelltes) Ladesteckelement eingesteckt werden, um die elektrische Energiespeichereinrichtung in dem Elektrofahrzeug 1 elektrisch aufzuladen.

Die Ladeöffnung 6 der Ladeeinheit 5 ist durch eine Ladeklappe 10 verschließbar, die durch eine Viergelenkanordnung 14 an eine Tragstruktur des Elektrofahrzeugs 1 angelenkt ist.

In der Schnittdarstellung der Figur 2 sieht man, dass die Viergelenkanordnung 14 Lenker 11, 12 und eine Federeinrichtung 15 umfasst. Darüber hinaus ist die Viergelenkanordnung 14 mit einem Push-Push-Element 20 kombiniert. Dem Push-Push-Element 20 wiederum ist eine Verriegelungseinrichtung 22 mit einem Aktuator 23 zugeordnet.

Mit dem Aktuator 23 der Verriegelungseinrichtung 22 kann das Push-Push-Element 20 blockiert werden. Das Push-Push-Element 20 ermöglicht vorteilhaft eine geringfügige, etwa fingerbreite Öffnung der Ladeklappe 10. Diese geringfügige Öffnung der Ladeklappe 10 wird durch Ausüben von Druck, zum Beispiel mit dem Finger oder der Hand, durch die Ladeklappe 10 auf das Push-Push-Element 20 bewirkt.

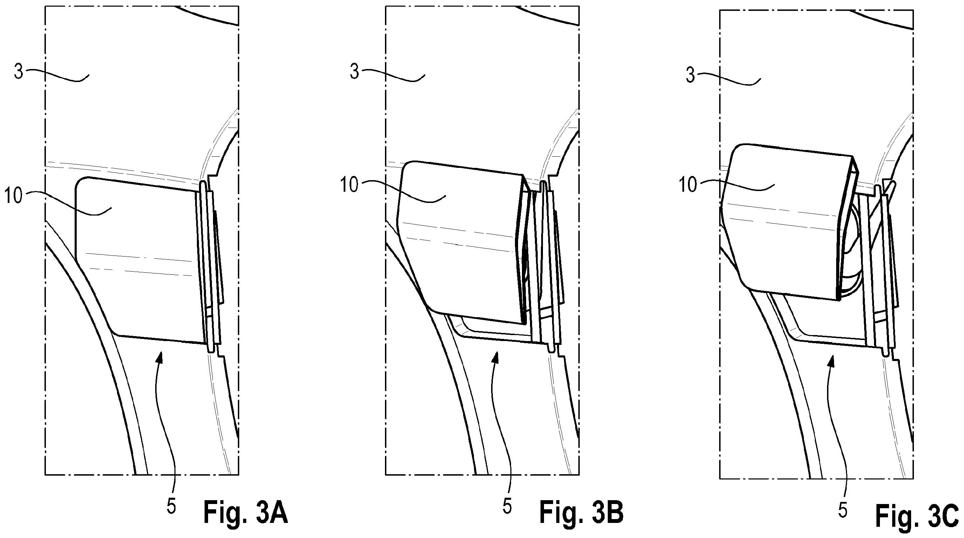

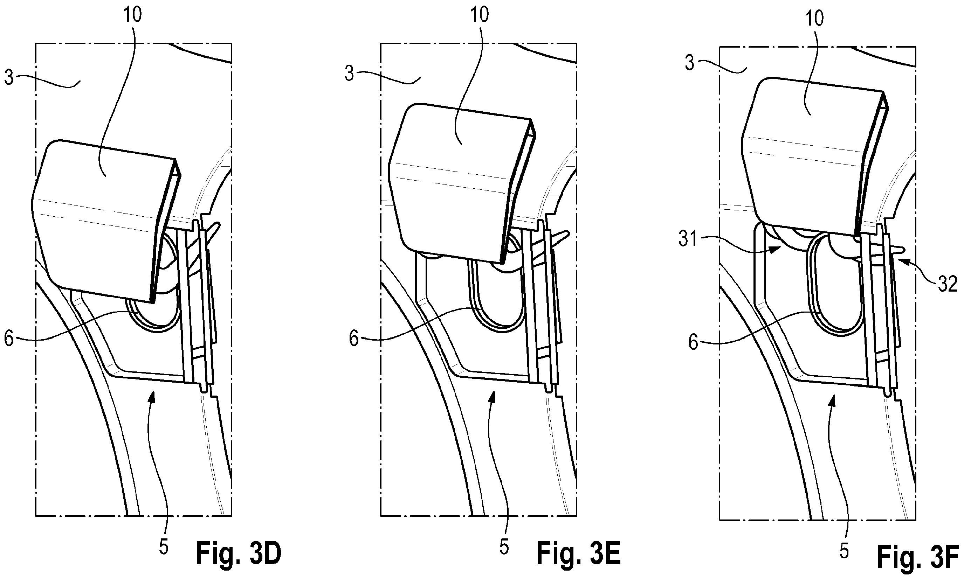

In den Figuren 3A bis 3F ist eine Bewegung der Ladeklappe 10 zwischen ihrer Schließstellung in Figur 3A und ihrer Offenstellung in Figur 3F dargestellt. In der Schließstellung verschließt die Ladeklappe 10 die darunter angeordnete Ladeöffnung im Kotflügel 3 vollständig.

In Figur 3B ist die Ladeklappe 10 durch Betätigung des Push-Push-Elements geringfügig geöffnet. In den Figuren 3C bis 3E wird die Ladeöffnung 6 durch ein weiteres Öffnen der Ladeklappe 10 immer mehr geöffnet, bis die Ladeöffnung 6 in der Offenstellung der Ladeklappe 10 schließlich vollständig freigegeben ist.

In der Offenstellung ist die Ladeklappe 10, wie man in Figur 3F sieht, oberhalb der Ladeöffnung 6 an dem Kotflügel 3 angeordnet. Dabei ist die Ladeklappe 10 immer noch geringfügig von dem Kotflügel 3 beabstandet. Durch die Anordnung der Ladeklappe 10 oberhalb der Ladeöffnung 6 in ihrer Offenstellung kann auf einfache Art und Weise der geeignete Ladestecker in die Ladeöffnung 6 eingesteckt werden.

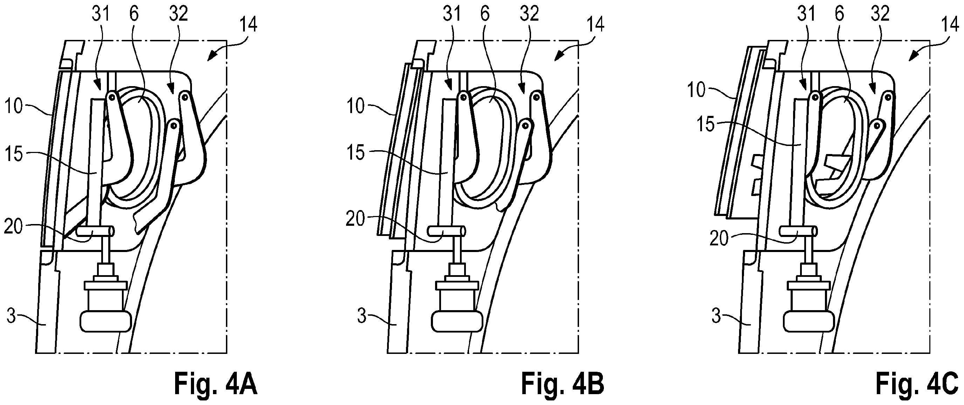

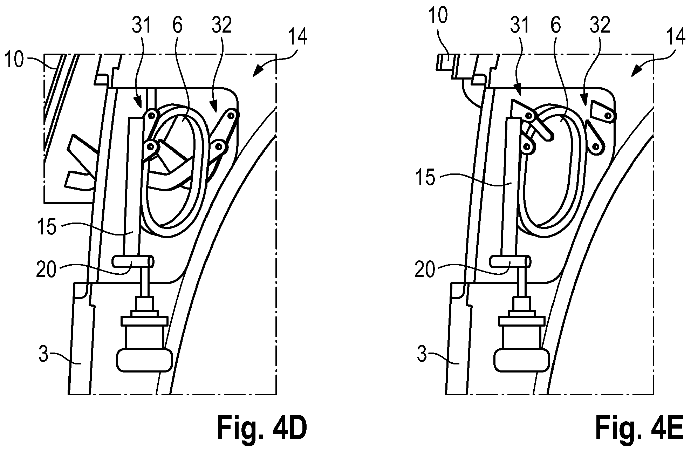

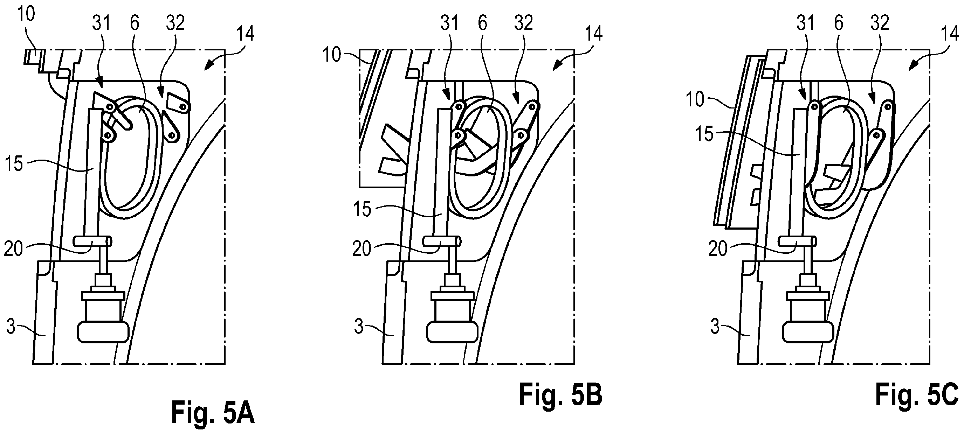

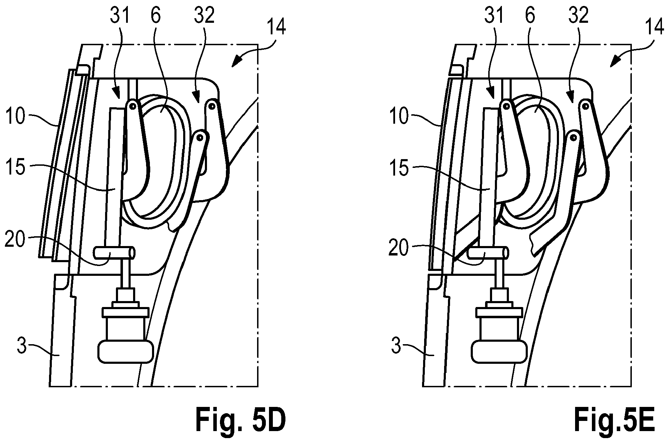

In den Figuren 4 und 5 sind das Öffnen und das Schließen der Ladeklappe 10 veranschaulicht. In den Figuren 4 und 5 sieht man, dass die Viergelenkanordnung 14 zwei Lenkerpaare 31, 32 mit jeweils zwei Lenkern umfasst, die ein Viergelenk darstellen. Durch die beiden Lenkerpaare 31, 32 wird die Ladeklappe 10 besonders stabil an der Tragstruktur des vorderen Kotflügels 3 gehalten.

In Figur 4A ist die Ladeklappe 10 in ihrer Schließstellung dargestellt. Durch einen Druckimpuls auf das Push-Push-Element 20, der vorzugsweise manuell auf die Ladeklappe 10 ausgeübt wird, wird die Ladeklappe 10 durch das Push-Push-Element 20 entgegen der Federkraft der Federeinrichtung 15 fingerbreit aufgestemmt.

In Figur 4B ist die Ladeklappe 10 in ihrer Totpunktstellung dargestellt, die durch einen Federtotpunkt der Federeinrichtung 15 definiert wird. Aus ihrer in Figur 4B dargestellten Totpunktstellung wird die Ladeklappe 10 entgegen der Federkraft der Federeinrichtung 15 weiter geöffnet, bis der Umkehrpunkt der Federeinrichtung 15 überwunden ist.

In den Figuren 4C und 4D ist veranschaulicht, dass die Ladeklappe 10 nach Überwinden des Umkehrpunkts der Federeinrichtung 15 durch die Federkraft der Federeinrichtung 15 automatisch öffnet, bis die Offenstellung der Ladeklappe 10 in Figur 4E erreicht ist.

In Figur 5A ist die Ladeklappe 10 in ihrer Offenstellung dargestellt. Beim Schließen wird die Ladeklappe 10 zunächst manuell durch Herunterdrücken der Ladeklappe 10 entgegen der Federkraft der Federeinrichtung 15 bis über deren Umkehrpunkt bewegt. Nach Überwinden des Umkehrpunkts schließt die Ladeklappe 10 dann automatisch.

In Figur 5B ist die Ladeklappe 10 etwa zur Hälfte geschlossen. In Figur 5C ist die Ladeklappe 10 etwa zu siebzig Prozent geschlossen. Figur 5D entspricht der Totpunktstellung der Ladeklappe 10, die durch den Federtotpunkt der Federeinrichtung 15 definiert wird. In Figur 5E ist die Ladeklappe 10 vollständig geschlossen.

## Patentansprüche

1. Mechanismus zum Betätigen einer Ladeklappe (10), insbesondere eines Elektrofahrzeugs (1), die durch eine Viergelenkanordnung (14) so an eine Tragstruktur angelenkt ist, dass die Ladeklappe (10) zwischen einer Schließstellung (Fig.3A) und einer Offenstellung (Fig.3F) bewegbar ist, **dadurch gekennzeichnet, dass** der Mechanismus zum Betätigen der Ladeklappe (10) ein Push-Push-Element (20) umfasst, das mit einer Federeinrichtung (15) kombiniert ist, die der Viergelenkanordnung (14) zugeordnet ist.

2. Mechanismus nach Anspruch 1, **dadurch gekennzeichnet, dass** die Ladeklappe (10) durch die Federeinrichtung (15) in ihre Schließstellung (Fig.3A) und ihre Offenstellung (Fig.3F) vorgespannt ist.

3. Mechanismus nach einem der vorhergehenden Ansprüche, **dadurch gekennzeichnet, dass** die Federeinrichtung (14) einen Federtotpunkt aufweist, dem eine Totpunktstellung (Fig.4B, Fig.5D) der Ladeklappe (10) zugeordnet ist, in welcher die Ladeklappe (10) zwischen ihrer Schließstellung (Fig.3A) und ihrer Offenstellung (Fig.3F) angeordnet ist.

4. Mechanismus nach einem der vorhergehenden Ansprüche, **dadurch gekennzeichnet, dass** die Ladeklappe (10) aus ihrer Schließstellung (Fig.3A) nach oben in ihre Offenstellung (Fig. 3F) verschwenkbar ist.

5. Mechanismus nach einem der vorhergehenden Ansprüche, **dadurch gekennzeichnet, dass** die Ladeklappe (10) in ihrer Offenstellung (Fig.3F) oberhalb einer Ladeöffnung (6) angeordnet ist.

6. Mechanismus nach einem der vorhergehenden Ansprüche, **dadurch gekennzeichnet, dass** die Viergelenkanordnung (15) zwei Lenkerpaare (31,32) umfasst, die an zwei Seiten der Ladeklappe (10) angelenkt sind.

7. Verfahren zum Betätigen einer Ladeklappe (10), insbesondere eines Elektrofahrzeugs (1), mit einem Mechanismus nach einem der vorhergehenden Ansprüche, **dadurch gekennzeichnet, dass** die Ladeklappe (10) nach Druckausübung auf das Push-Push-Element (20) beim Öffnen durch das Push-Push-Element (20) zunächst nur geringfügig, insbesondere etwa fingerbreit, geöffnet wird (Fig.4A), bevor die Ladeklappe (10) dann manuell weiter geöffnet wird (Fig.4B).

8. Verfahren nach Anspruch 7, **dadurch gekennzeichnet, dass** die Ladeklappe (10) beim weiteren Öffnen (Fig.4C, Fig.4D) nach Überwinden eines beziehungsweise des Federtotpunkts durch die Federeinrichtung (14) in ihre Offenstellung (Fig.4E) bewegt wird.

9. Verfahren nach Anspruch 7 oder 8, **dadurch gekennzeichnet, dass** die Ladeklappe (10) beim Schließen zunächst manuell so weit geschlossen wird (Fig.5B, Fig.5C), bis die Ladeklappe (10) nach Überwinden des Federtotpunkts (Fig.5D) durch die Federeinrichtung (14) geschlossen wird (Fig.5E).

10. Elektrofahrzeug (1) mit einer Ladeklappe (10), die mit einem Mechanismus nach einem der Ansprüche 1 bis 6, insbesondere gemäß einem Verfahren nach einem der Ansprüche 7 bis 9, betätigbar ist.
